(19) Europäisches Patentamt
European Patent Office
Office européen des brevets

(11) **EP 3 410 081 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(51) Int Cl.:
***G01H 1/00*** *(2006.01)*          *G01M 7/00* *(2006.01)*
***G01H 3/00*** *(2006.01)*

(21) Anmeldenummer: **18167441.7**

(22) Anmeldetag: **16.04.2018**

(54) **EFFEKTIVWERTBESTIMMUNG EINER MASCHINENSCHWINGUNGSGRÖSSE**

EFFECTIVE VALUE DETERMINATION OF A MACHINERY VIBRATION MEASURE

DÉTERMINATION DE LA VALEUR EFFICACE D'UNE MESURANDE DE VIBRATION D'UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2017 DE 102017110342**

(43) Veröffentlichungstag der Anmeldung:
**05.12.2018 Patentblatt 2018/49**

(73) Patentinhaber: **Prüftechnik Dieter Busch GmbH**
**85737 Ismaning (DE)**

(72) Erfinder:
• **Brunn, Dietrich**
**85774 Unterföhring (DE)**
• **Germer, Jan**
**81667 München (DE)**

(56) Entgegenhaltungen:
DE-U1- 9 400 950     KR-A- 20160 109 159
US-B1- 6 308 139

EP 3 410 081 B1

**Beschreibung**

Die Erfindung betrifft ein Verfahren und eine Vorrichtung zum Bestimmen des Effektivwerts einer an einer Maschine gemessenen Schwingungsgröße.

Effektivwerte von Schwingungsgrößen spielen bei der schwingungsbasierten Zustandsüberwachung von Maschinen eine wichtige Rolle, so dass die zuverlässige Bestimmung von Effektivwerten ein wesentlicher Bestandteil einer solchen Zustandsüberwachung ist (der Effektivwert ("root mean square" (RMS)-Wert) eines Signals ist die Quadratwurzel der mittleren Leistung). Der Effektivwert einer Schwingungsgröße kann in der Praxis bestimmt werden, indem die Schwingungsgröße über eine bestimmte Messdauer gemessen wird und aus dem gemessenen Signal unter Berücksichtigung einer in der Regel eindeutig vorgegebenen Übertragungsfunktion (Frequenzgang) der Effektivwert $y_{eff}$ berechnet wird gemäß

$$y_{\text{eff}} = \sqrt{\frac{1}{\tau} \int_0^\tau |y(t)|^2 \, \mathrm{d}t} = \sqrt{\frac{1}{\tau} \int_0^\tau |g(t) * x(t)|^2 \, \mathrm{d}t}$$

wobei $\tau$ die Signallänge, $g(t)$ die Übertragungsfunktion und $x(t)$ das gemessene Signal angeben.

Während die Übertragungsfunktion in der Regel festgelegt ist, um die Effektivwerte untereinander vergleichbar zu halten, gibt es für die Messdauer meist keine strikte Vorgabe. Ein signifikanter Einfluss der Messdauer auf den erhaltenen Effektivwert kann sich insbesondere beim Vorhandensein von Schwebungen ergeben, d.h. wenn das Schwingungssignal mindestens zwei nahe beieinanderliegende wesentliche Frequenzen enthält. In einem solchen Fall kann der erhaltene Effektivwert als Funktion der Messdauer oszillieren, was eine zuverlässige Ermittlung des Effektivwertes schwierig macht. Insbesondere kann sich dadurch ein von Messung zu Messung unterschiedlicher Effektivwert ergeben, obwohl sich der Maschinenzustand gar nicht geändert hat. Schwebungen treten beispielsweise bei zwei nahezu gleich drehenden Lüftern, Pumpen oder Motoren oder bei dem konstruktionsbedingten Schlupf von Asynchronmotoren auf und können grundsätzlich nicht durch Bandpassfilter unterdrückt werden.

Die DE 101 34 013 A1 betrifft ein Verfahren zur Schwingungsüberwachung von Maschinen, wobei der zeitliche Abstand zwischen zwei Messvorgängen anhand des Ergebnisses einer Testmessung festgelegt wird.

In der WO 2011/087440 A1 ist eine Schwingungsüberwachung von Maschinen beschrieben, wo Testmessungen unter Laborbedingungen verwendet werden, um die Werte von Amplitudenspitzen möglichst genau zu bestimmen.

Die US 6,308,139 B1 offenbart einen digitalen Prozess zur Bestimmung des Effektivwerts eines periodischen elektrischen Testsignals, wobei das Testsignal während eines Abtastintervalls abgetastet wird, das sich in der Dauer von der Periode des Testsignals unterscheidet, und nach einer Analog-Digital-Umwandlung der Abtastwerte.

Die DE 94 00 950 U1 betrifft eine Vorrichtung und ein Verfahren zum Erkennen von Vitalfunktionen lebender Körper, insbesondere menschlicher Körper, unter Verwendung elektromagnetischer Signale und eines Empfängers dafür, bei dem lebende Körper zuverlässig von toten unterschieden werden können.

Aus der KR 2016 0109159 A geht ein Abnormalitätsdiagnoseverfahren einer Rotationsmaschine hervor, die auf einer fiktiven Frequenzantwortfunktion basiert, sowie eine Abnormalitätsdiagnosevorrichtung, die dieses verwendet.

Es ist Aufgabe der vorliegenden Erfindung, ein Verfahren und eine Vorrichtung zur Bestimmung des Effektivwerts einer an einer Maschine gemessenen Schwingungsgröße zu schaffen, wobei eine besonders zuverlässige Ermittlung des Effektivwerts ermöglicht werden soll.

Diese Aufgabe wird erfindungsgemäß gelöst durch ein Verfahren gemäß Anspruch 1 bzw. ein System gemäß Anspruch 12.

Bei der Erfindung wird eine besonders zuverlässige Bestimmung des Effektivwerts dadurch erzielt, dass zunächst eine Testmessung ausgeführt wird, um ein Testsignal der Schwingungsgröße mit einer Testsignallänge zu erhalten, wobei der Einfluss einer Verkürzung der Signallänge des Testsignals auf den zugehörigen Effektivwert abgeschätzt wird und daraus die relative Abweichung des sich für eine verkürzte Signallänge ergebenden Effektivwerts von dem sich für die volle Testsignallänge ergebenden Effektivwert als Funktion der Signallänge abgeschätzt wird, um eine Effektivwertfehlerfunktion zu erhalten; bei den nachfolgenden eigentlichen Messungen der Schwingungsgröße zwecks Bestimmung des Effektivwerts kann dann die am besten geeignete Messdauer jeweils anhand der Effektivwertfehlerfunktion ausgewählt werden.

Gemäß einem Anwendungsbeispiel kann dabei ein maximal tolerierbarer Fehler für den Effektivwert vorgegeben werden, wobei dann die Messdauer als die gemäß der Effektivwertfehlerfunktion zu diesem Effektivfehlerwert gehörende Messdauer ausgewählt wird.

Gemäß einem anderen Anwendungsbeispiel kann aus der Effektivwertfehlerfunktion für jede Messdauer ein Qualitätsindikator entsprechend dem zu der Messdauer gehörigen Effektivwertfehlerwert ermittelt werden, wobei der Qualitätsindikator dann beispielsweise während der laufenden Messung regelmäßig entsprechend der aktuell bereits verstrichenen

Messdauer aktualisiert und ausgegeben werden, so dass die Messung beispielsweise nach Erreichen eines bestimmten Mindestwerts des Qualitätsindikators beendet werden kann.

Erfindungsgemäß wird das Testsignal quadriert und in den Frequenzbereich transformiert, um Spektralkomponenten des quadrierten Testsignals zu erhalten, wobei der Einfluss einer Verkürzung der Signallänge des Testsignals auf die Spektralkomponenten abgeschätzt wird, um den Einfluss einer Verkürzung der Signallänge des Testsignals auf den relativen Fehler des Effektivwerts abzuschätzen. Dabei wird eine Fensterung des Testsignals vorgenommen, wobei eine gewichtete Summe von Spektralkomponenten ermittelt wird; die Gewichtung hängt dabei von der Signallänge ab und kann beispielsweise als lineares Filter implementiert werden.

Weitere bevorzugte Ausgestaltungen der Erfindung ergeben sich aus den Unteransprüchen.

Im Folgenden werden Ausgestaltungen der Erfindung beispielhaft anhand der beiliegenden Zeichnungen näher erläutert. Dabei zeigen:

Fig. 1      eine schematische Darstellung eines Beispiels eines Systems zur Ermittlung von Effektivwerten an einer Maschine;

Fig. 2      eine beispielhafte Darstellung des relativen Fehlers des Effektivwerts eines Sinussignals als Vielfaches der Frequenzauflösung;

Fig. 3      eine beispielhafte Darstellung eines sich aus der Überlagerung von zwei Sinussignalen ergebenden Messsignals bzw. des Betragsquadrats des Messsignals;

Fig. 4      Beispiele für die Übertragungsfunktionen verschiedener Fenster bzw. Filter, wie sie bei der Ermittlung der Abhängigkeit des relativen Fehlers des Effektivwerts von der Signallänge verwendet werden können;

Fig. 5      Beispiele für die Schwankung des relativen Fehlers des Effektivwerts für verschiedene Fensterlängen als Funktion der Phasenlage des Fensters;

Fig. 6      Beispiele für die Abschätzung des relativen Fehlers des Effektivwerts als Funktion der Fensterlänge bzw. der Signallänge, wobei dies für ein Rechteckfenster sowie für eine Abschätzung des minimalen bzw. maximalen Fehlers dargestellt ist; und

Fig. 7      ein Flussdiagramm zur Ermittlung der minimalen Messdauer in Abhängigkeit von einem vorgegebenen maximal tolerierbaren Fehler.

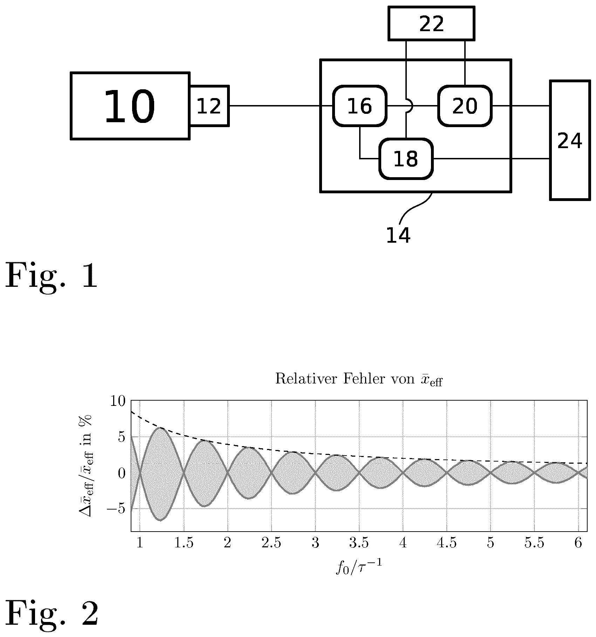

Fig. 1 zeigt schematisch ein Beispiel für ein System zur Bestimmung von Effektivwerten von Maschinenschwingungsgrößen, wobei eine Maschine 10 mit einem Schwingungssensor 12 versehen ist, der eine Schwingungsgröße, beispielsweise Geschwindigkeit oder Beschleunigung, an der Maschine über die Zeit misst. Der Sensor 12 ist mit einer Auswertungseinrichtung 14 verbunden, welche aus dem Signal des Sensors 12 Effektivwerte der Schwingungsgröße ermittelt. Die Auswertungseinrichtung 14 umfasst eine Einheit 16 zum Quadrieren des Zeitsignals des Sensors 12, eine Einheit 18 zum Ermitteln einer Effektivwertfehlerfunktion durch das Auswerten des komplexen Spektrums der quadrierten Schwingungsgröße, welches durch Übertragen des quadrierten Signals in den Frequenzbereich erhalten wurde und einer Einheit 20 zur Ermittlung des Effektivwertes aus dem quadrierten Signal unter Berücksichtigung der durch Einheit 18 bestimmten Effektivwertfehlerfunktion. Das System umfasst ferner eine Eingabeeinheit 22, mittels welcher beispielsweise Messungen gestartet und beendet werden können und Randbedingungen für die Auswertung der Signale eingegeben werden können, sowie eine Ausgabeeinheit 24 zum Ausgeben von Ergebnissen der Signalauswertung.

Aus einer Schwingungsmessung mittels des Sensors 12 erhält man ein bandbegrenztes, zeitdiskretes Signal mit einer bestimmten Länge, welches mit einer Abtastfrequenz abgetastet wurde und aus welchem mittels einer Fast-Fourier-Transformation (FFT) ein diskretes Spektrum erhalten wird; dabei handelt es sich um eine diskretisierte Version der Fourier-Transformation des Zeitsignals x(t).

Bei der Bestimmung des Effektivwertes des Signals x(t) wird üblicherweise ein vorgegebener Frequenzgang durch ein Filter mit der geforderten Übertragungsfunktion realisiert, welches auf das Signal x(t) angewandt wird, was sich durch die Faltung

$$y(t) = g(t){*}x(t)$$

ausdrücken lässt. Für ein Signal der Länge $\tau$ ist der Effektivwert, wie eingangs bereits erwähnt, durch

$$y_{\text{eff}} = \sqrt{\frac{1}{\tau} \int_0^\tau |y(t)|^2 \, \mathrm{d}t} = \sqrt{\frac{1}{\tau} \int_0^\tau |g(t) * x(t)|^2 \, \mathrm{d}t}$$

gegeben. Mit dem zeitdiskreten Signal $y_k = y(kT)$ lässt sich unter der Voraussetzung, dass das Abtasttheorem eingehalten wird, der Effektivwert auch durch

$$y_{\text{eff}} = \sqrt{\frac{1}{N} \sum_{k=0}^{N-1} |y_k|^2}$$

bestimmen, wobei $N = \tau/T$ die Anzahl der zeitdiskreten Werte und T das Abtastintervall angibt. Bei der Bestimmung des Effektivwerts wird also das quadrierte Signal y(t) ausgewertet.

Während bei der Ermittlung des Effektivwerts die Übertragungsfunktion in der Regel eindeutig vorgegeben ist, gibt es für die Messdauer des Signals x(t) jedoch meist keine genaue Vorgabe, obwohl das Ergebnis durchaus von der Messdauer abhängt. In Fig. 2 ist beispielhaft der Einfluss der Messdauer auf den Effektivwert für ein Signal dargestellt, welches näherungsweise nur aus einer Sinusschwingung besteht, wobei die relative Abweichung des sich ergebenden Effektivwertes (in Prozent) als Funktion des Verhältnisses der Frequenz $f_0$ des Signals und der Frequenzauflösung $\tau^{-1}$, d.h. als Funktion der Messdauer bzw. Signallänge $\tau$ angegeben ist. So beträgt beispielsweise bei einer Signallänge von fünf Perioden der relative Fehler des Effektivwerts etwa 2%. Da die Frequenzanteile eines an der Maschine gemessenen Schwingungssignals in der Regel nicht bekannt sind, wird in der Praxis als Messdauer oftmals ein Vielfaches der Periode der Hochpass-Eckfrequenz des für die Übertragungsfunktion g(t) geforderten Bandpassfilters verwendet, da Frequenzen unterhalb dieser Eckfrequenz keinen relevanten Beitrag zum Effektivwert geben.

Beim Vorhandensein von Schwebungen kann sich eine so gewählte Messdauer jedoch als zu kurz herausstellen, wie am folgenden Beispiel kurz erläutert wird. Hierzu wird die Summe zweier Sinusschwingungen mit $f_0 = 4$ Hz und $f_1 = 4$ Hz + 0,5 Hz betrachtet, wobei das Signal

$$x_s(t) = \sin(2\pi f_0 t) + \sin\big(2\pi (f_0 + \Delta f) t\big) \tag{1}$$

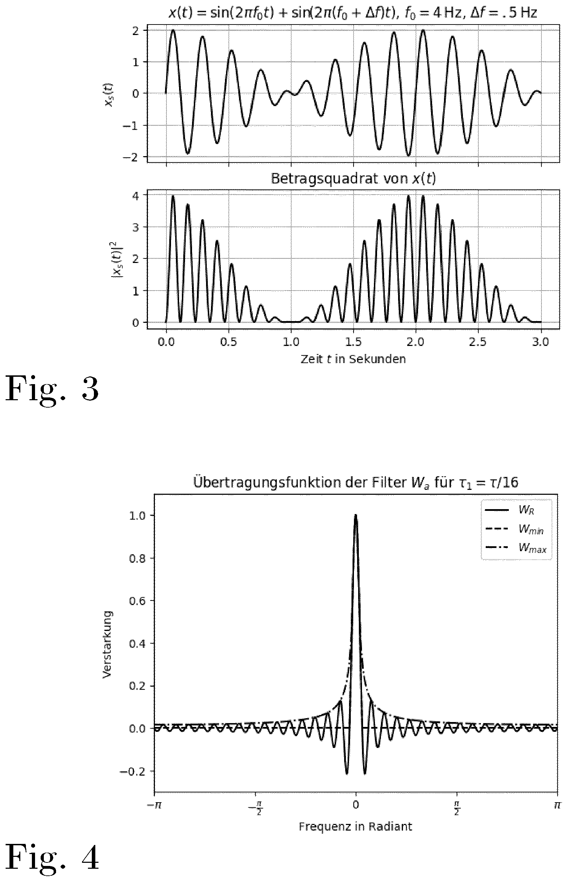

eine Schwebung mit einer Schwebungsfrequenz $\Delta f = 0,5$ Hz aufweist. In Fig. 3 oben ist das Zeitsignal gezeigt. Der Effektivwert wird jedoch, wie oben erwähnt, aus dem quadrierten Signal berechnet (siehe Fig. 3 unten). Obwohl das Zeitsignal keine Frequenzanteile mit weniger als 4 Hz besitzt, ist die niedrigste Periodendauer des quadrierten Signals durch $\Delta f = 0,5$ Hz gegeben. Entsprechend sollte die Messdauer daher ein Vielfaches der Periodendauer dieser Schwebung betragen. Aus diesem Beispiel ist ersichtlich, dass das Vorsehen von festen Messzeiten zur Ermittlung des Effektivwerts problematisch sein kann, da i.d.R. Schwebungen nicht ausgeschlossen werden können.

Bei der vorliegenden Erfindung wird deshalb eine Testmessung vor der eigentlichen Messung zur Ermittlung des Effektivwerts durchgeführt. Aus der Testmessung wird die Unsicherheit der Effektivwertbestimmung in der Abhängigkeit von der Messdauer für die spezifische Messstelle ermittelt, so dass die Messdauer optimal an das Signal angepasst werden kann. Dabei kann ein direkter Zusammenhang zwischen der Unsicherheit des Effektivwerts und der Messdauer ermittelt werden. Gemäß einem Anwendungsbeispiel kann dabei der Benutzer eine maximal tolerierbare Unsicherheit für den Effektivwert vorgeben, wobei dann anhand der Testmessungen für jede Messstelle an der Maschine die optimale Messdauer bestimmt wird. Ferner kann dem Benutzer während den eigentlichen Effektivwertmessungen basierend auf den durch die Testmessung gewonnenen Informationen die durch die bisherige Messdauer erreichte Genauigkeit bzw. Messunsicherheit des Effektivwerts als Qualitätsindikator über die Ausgabeeinrichtung 24, beispielsweise in Form eines Fortschrittbalkens, angegeben werden; dies ermöglicht es dem Benutzer beispielsweise, eine informierte Entscheidung darüber zu treffen, ob es sinnvoll ist, die laufende Messung vorzeitig zu beenden, um Zeit zu sparen.

Ausgangspunkt eines Verfahrens zum Bestimmen des Effektivwerts ist eine Testmessung an der betreffenden Messstelle, deren Messdauer $\tau_0$ ausreichend lang ist, um alle relevanten Signalanteile inklusive Schwebungen auflösen zu können. Die Testmessdauer bzw. Testsignallänge hängt von der niedrigsten Schwebefrequenz $\Delta f_{\text{min}}$ ab, welche berücksichtigt werden soll, und sollte dabei mindestens doppelt so lange wie deren Periodendauer sein.

$y_k$ sei das zeitdiskrete, gegebenenfalls gefilterte Signal der Länge $N_0 = \tau_0/T$, wobei T das Abtastintervall darstellt.

Aus diesem Signal wird die diskrete Fourier-Transformierte $Y_l^{(2)}$ des quadrierten Signals $y_k^2$ bestimmt, d.h.:

$$Y_l^{(2)} = \mathscr{F}\{y_k^2\}_l = \sum_0^{N_0} y_k^2 \cdot e^{2\pi \frac{kl}{N_0}}, \qquad l \in [-N_0/2, N_0/2] \subset \mathbb{Z}$$

Dabei entspricht der Wert für l = 0 der Leistung, $Y_0^{(2)}/N = y_{eff}^2$.

Den Einfluss einer im Vergleich zur Testmesszeit $\tau_0$ kürzeren Messdauer $\tau_1 = N_1 T$ auf dem sich ergebenden Effektivwert erhält man, indem man das Spektrum $Y^{(2)}$ mit der Fourier-Transformierten $W_R(N_1)$ einer Rechteckfunktion $w_R(N_1)$ der Länge $N_1$, faltet:

$$Y^{(2)}(N_1) = Y^{(2)}(N_0) * W_R(N_1)$$

mit

$$W_R(N_1) = \frac{1}{N_1} \sum_{k=0}^{N_1-1} e^{-i2\pi(k-k_1)Tf} = \frac{e^{-i(N_1-1)\pi Tf}}{N_1} \frac{\sin(N_1 \pi Tf)}{\sin(\pi Tf)} \qquad (2)$$

Durch diese Faltung verschmieren die Linien im Spektrum (sogenannter Leck-Effekt). Relevant für den Effektivwert ist dabei der Beitrag zu $Y_0^{(2)}(N_1)$, welcher durch die Verschmierung der Komponenten $Y^{(2)}_{l \neq 0}(N_0)$ entsteht. Diesen Beitrag erhält man, indem man die diskrete Faltung an $l = 0$ auswertet, d.h.

$$Y_{l=0}^{(2)}(N_1) = \sum_{k=-N_0/2}^{N_0/2} Y_k^{(2)}(N_0) \cdot W_{R,-k}(N_1) \qquad (3)$$

Der relative Fehler $\Delta y_{eff}(\tau_1)$, welcher durch ein kurzes Signal $t \leq \tau_1$ entsteht, ergibt sich zu

$$\Delta y_{eff}(\tau_1) = \frac{\sqrt{(Y_0^{(2)}(N_1))} - \sqrt{(Y_0^{(2)}(N_0))}}{\sqrt{(Y_0^{(2)}(N_0))}} \qquad (4)$$

Würde man nun ein verschobenes Zeitfenster der gleichen Länge, welches bei to beginnt, wählen, so äußert sich dies in einem zusätzlichen Phasenfaktor in der Gleichung (2), wobei sich durch Interferenzen in Gleichung (3) der Wert von $\Delta y_{eff}(\tau_1)$ in Abhängigkeit von to ändert und dabei zwischen

$$\Delta y_{eff}(\tau_1) \in [\Delta y_{eff,\,min}(\tau_1), \Delta y_{eff,\,max}(\tau_1)]$$

schwankt.

Durch kohärentes Aufsummieren aller Terme in Gleichung (3) erhält man eine obere Schranke für $y^{(2)}(N_1)$, und damit für $\Delta y_{eff}(\tau_1)$

$$Y_{l=0}^{(2)}(N_1) \leq \sum_{k=-N/2}^{N/2} |Y_k^{(2)}(N)| \cdot |W_{R,-k}(N_1)| \qquad (5)$$

Ersetzt man die Fourier-Transformierte $W_R$ des Rechteckfensters mit einer geeigneten Funktion W, so lässt sich damit eine Fehlerabschätzung für den Effektivwert konstruieren, welche mit zunehmendem Zeitfenster $\tau_1$ (bzw. $N_1$)

monoton abnimmt; eine solche monotone Abnahme liegt bei der Fourier-Transformierten $W_R$ eines Rechteckfensters nicht vor, da diese oszilliert. Mit einem Fenster $W_{min}$ bzw. einem Fenster $W_{max}$ kann eine monoton abnehmende untere bzw. obere Abschätzung des sich mit der entsprechenden Fensterung ergebenden Effektivwerts erzielt werden:

$$Y_{\text{max}}^{(2)}(N_1) = \sum_{k=-N_0/2}^{N_0/2} |Y_k^{(2)}(N_0)| \cdot W_{\text{max},k}(N_1),$$

$$Y_{\text{min}}^{(2)}(N_1) = \sum_{k=-N_0/2}^{N_0/2} |Y_k^{(2)}(N_0)| \cdot W_{\text{min},k}(N_1) \tag{6}$$

Eine obere Abschätzung erhält man, indem man die Fourier-Transformierte $W_R$ des Rechteckfensters durch deren Einhüllende ersetzt, während man eine untere Abschätzung (minimaler Fehler) erhält, indem man nur das Hauptmaximum von $W_R$ um f = 0 herum bis zur ersten Nullstelle heranzieht und alle anderen Werte gleich null setzt:

$$W_{\text{max}}(N) = \begin{cases} \frac{1}{N} \frac{\sin(N\pi fT)}{\sin(\pi fT)} & \text{für } |f| \leq \frac{1}{2NT} \\ \frac{1}{N} \frac{1}{\sin(\pi fT)} \approx \frac{1}{N\pi fT} & \text{für } |f| > \frac{1}{2NT}, \end{cases}$$

$$W_{\text{min}}(N) = \begin{cases} \frac{1}{N} \frac{\sin(N\pi fT)}{\sin(\pi fT)} & \text{für } |f| \leq \frac{1}{NT} \\ 0 & \text{für } |f| > \frac{1}{NT} \end{cases} \tag{7}$$

Die Fenster W können dabei als Tiefpassfilter interpretiert werden, welche auf das Signal $y^2$ wirken, wobei die entsprechende Filtercharakteristik (Verstärkung als Funktion der Frequenz), d.h. die Übertragungsfunktion der genannten Filter, in Fig. 4 beispielhaft dargestellt ist. Dabei ist ersichtlich, dass das Rechteckfenster bzw. dessen Fourier-Transformierte $W_R$ aufgrund des oszillierenden Verhaltens nicht für die Abschätzung des Fehlers des Effektivwerts geeignet ist, während die Einhüllende $W_{max}$ bzw. der erste Hauptschwinger $W_{min}$ das gewünschte monotone Verhalten zeigen.

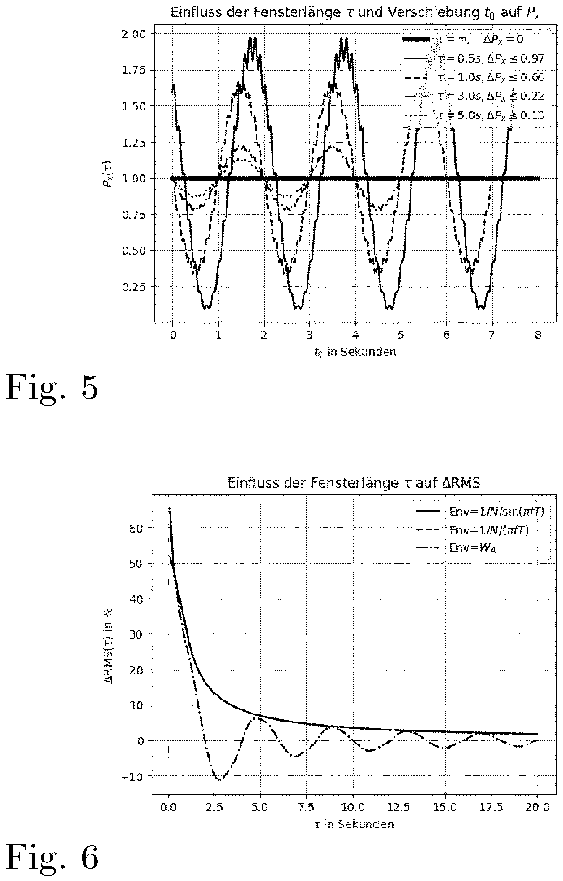

In Fig. 5 ist die relative Abweichung des gleitenden Effektivwerts für verschiedene Fensterlängen $\tau$ für das Beispielsignal von Gleichung (1) bzw. Fig. 3 gezeigt, wobei ersichtlich ist, dass der Effektivwert bzw. die relative Abweichung des Effektivwerts von dem Effektivwert bei unendlich langer Messdauer mit der Frequenz der Schwebung oszilliert.

In Fig. 6 ist ein Beispiel für die Effektivwertfehlerabschätzung gemäß Gleichung (4) für die drei Filter von Fig. 4 (d.h. für die Filter gemäß Gleichung (2) und (7)) gezeigt, wobei der relative Fehler des Effektivwerts als Funktion der Fensterlänge bzw. Signallänge $\tau$ angegeben ist. Wählt man hier z.B. das Fenster bzw. Filter $W_{max}$, kann man den maximalen relativen Fehler des Effektivwerts (d.h. die sich durch die endliche Signallänge bzw. Messdauer ergebende Abweichung des Effektivwerts von dem wahren, sich bei unendlich langer Messdauer ergebenden Effektivwert) in Abhängigkeit von der Messdauer bzw. Signallänge angeben, d.h. man erhält letztlich eine Effektivwertfehlerfunktion, aus der sich die sich für einen vorgegebenen maximal tolerierbaren Effektivwertfehler ergebende minimale Messdauer bzw. Signallänge ablesen lässt.

Stellt sich beispielsweise für bestimmte Maschinentypen die sich aus einer auf $W_{max}$ basierenden Effektivwertfehlerfunktion ergebende Messdauer als zu groß heraus, kann beispielsweise ein anderes Filter verwendet werden, welches so konstruiert ist, dass Werte zwischen $Y_{max}^{(2)}$ und $Y_{min}^{(2)}$ angenommen werden. Dabei lässt sich beispielsweise für ein zwischen 0 und 1 liegendes a folgende Filterschar definieren:

$$W_a(N) = a \cdot W_{\text{max}}(N) + (1-a) \cdot W_{\text{min}}(N) \tag{8}$$

welche einen kontinuierlichen Übergang zwischen minimalem Fehlerwert und maximalem Fehlerwert erlaubt. Dies erlaubt dann eine allgemeine Abschätzung der Leistung

$$Y_a^{(2)} = \sum_{k=-N_0/2}^{N_0/2} |Y_k^{(2)}(N_0)| \cdot W_a(N_1) = \sum_{k=-N_0/2}^{N_0/2} |\tilde{Y}_k^{(2)}(N_0)| \tag{9}$$

Der letzte Betragsterm lässt sich dabei alternativ auch aus einem entsprechenden gefilterten Signal erhalten, wobei der Filter der Fourier-Transformierten $w_a$ des Fensters $W_a$ entspricht:

$$\tilde{y}_k^{(2)}(N) = y_k^2 * w_a(N)$$

Somit lassen sich die Koeffizienten auch über entsprechende Filterbänke realisieren.

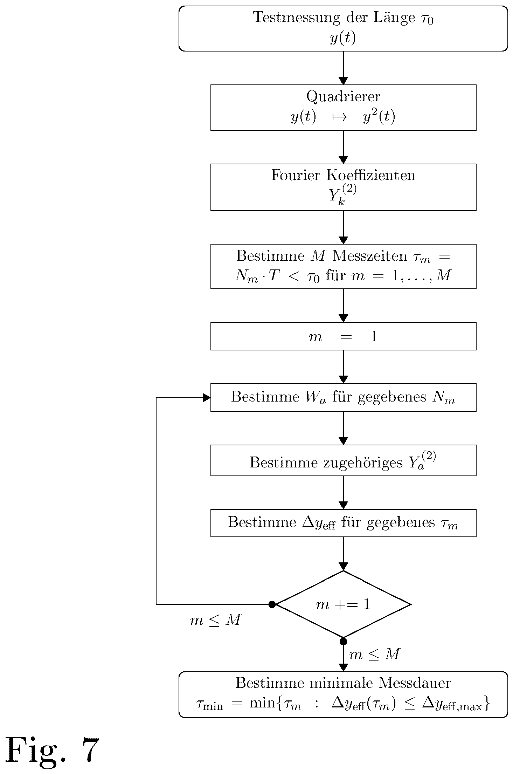

In Fig. 7 ist ein Flussdiagramm des beschriebenen Beispiels eines Verfahrens zur Effektivwertbestimmung gezeigt. Dieses Beispiel beinhaltet die folgenden Schritte: Schritt 100: Testmessung; Schritt 101: Quadrierung des Testsignals; Schritt 102: Fourier-Transformation des quadrierten Testsignals; Schritt 103: Bestimmen eines Satzes von $M$ Messdauern $m = 1, ...M$; Schritt 104: Setze $m = 1$; Schritt 105: Bestimmen eines Fensters $W_a$ für die Messdauer $m$; Berechnen des Effektivwerts für dieses Fenster; Schritt 107: Berechnen der relativen Abweichung des sich für dieses Fenster bzw. diese Messdauer ergebenden Effektivwerts von dem sich für die volle Testsignallänge ergebenden Effektivwert; Schritt 108: Gehe zur nächsten Messdauer, sofern noch nicht die letzte Messdauer erreicht ist und wiederhole die Abschätzung des relativen Effektivwertfehlers für die nächste Messdauer (d.h. gehe zurück zum Schritt 105); andernfalls gehe zum Schritt 109, worin die minimale Messdauer so bestimmt wird, dass der sich ergebende abgeschätzte relative Effektivwertfehler unterhalb eines vorgegebenen maximalen Fehlers liegt.

Da die Funktion $Y_{max}^{(2)}(N_1)$ monoton fallend ist, ist auch der entsprechende relative Fehler $\Delta y_{eff}(\tau_1)$ monoton fallend, so dass sich zu einem vorher festgelegten maximalen Fehler eine minimale Messdauer eindeutig ermitteln lässt. Diese kann beispielsweise durch den Benutzer vorgegeben werden. Wenn für jede Messstelle eine Testmessung erfolgt und die entsprechende Effektivwertfehlerfunktion ermittelt wird, kann dann für jeden Messpunkt aus dem vorgegebenen maximalen Fehler die erforderliche minimale Messdauer ermittelt werden. Vorzugsweise wird dem Benutzer während der tatsächlichen Effektivwertmessung zu jedem Zeitpunkt $\tau$ ein Qualitätsindikator angezeigt, welcher auf dem aktuell durch die Messung bereits erreichten relativen Fehler $\Delta y_{eff}(\tau_1)$ beruht; ein solcher Qualitätsindikator könnte sich beispielsweise aus 1- $\Delta y_{eff}(\tau_1)$ ergeben.

**Patentansprüche**

1. Verfahren zum Bestimmen des Effektivwerts einer an einer Maschine (10) gemessenen Schwingungsgröße, wobei:

   eine Testmessung ausgeführt wird, um ein Testsignal der Schwingungsgröße mit einer Testsignallänge zu erhalten, wobei die Testsignallänge mindestens doppelt so lang ist wie die Periodendauer der niedrigsten Schwebefrequenz;
   der Einfluss einer Verkürzung der Signallänge des Testsignals auf den zugehörigen Effektivwert abgeschätzt wird und daraus die relative Abweichung des sich für eine verkürzte Signallänge ergebenden Effektivwerts vom dem sich für die volle Testsignallänge ergebenden Effektivwert als Funktion der Signallänge abgeschätzt wird, um eine Effektivwertfehlerfunktion zu erhalten, wobei
   das Testsignal quadriert und in den Frequenzbereich transformiert wird, um Spektralkomponenten des quadrierten Testsignals zu erhalten, wobei der Einfluss einer Verkürzung der Signallänge des Testsignals auf die Spektralkomponenten mittels einer Fensterung des Testsignals abgeschätzt wird, um den Einfluss einer Verkürzung der Signallänge des Testsignals auf den sich ergebenden Effektivwert abzuschätzen, und
   der Einfluss einer Verkürzung der Signallänge des Testsignals auf den Effektivwert abgeschätzt wird, indem eine gewichtete Summe von Spektralkomponenten ermittelt wird, wobei die Gewichtung von der Signallänge abhängt; und
   eine Messung der Schwingungsgröße zwecks Bestimmung des Effektivwerts durchgeführt wird, wobei die Messdauer dieser Messung anhand der Effektivwertfehlerfunktion ausgewählt wird.

2. Verfahren gemäß Anspruch 1, **dadurch gekennzeichnet, dass** ein maximal tolerierbarer Fehler für den Effektivwert vorgegeben wird und als die Messdauer die gemäß der Effektivwertfehlerfunktion zu diesem Effektivwertfehlerwert gehörende Messdauer gewählt wird.

3. Verfahren gemäß Anspruch 1, **dadurch gekennzeichnet, dass** aus der Effektivwertfehlerfunktion für jede Messdauer ein Qualitätsindikator entsprechend dem zu der Messdauer gehörigen Effektivwertfehlerwert ermittelt wird.

4. Verfahren gemäß Anspruch 3, **dadurch gekennzeichnet, dass** der Qualitätsindikator während der laufenden Messung regelmäßig entsprechend der aktuell bereits verstrichenen Messdauer aktualisiert und ausgegeben wird, so dass die Messung nach Erreichen eines bestimmten Mindestwerts des Qualitätsindikators beendet werden kann.

5. Verfahren gemäß einem der vorhergehenden Ansprüche, **dadurch gekennzeichnet, dass** sich die Gewichtung als Einhüllende der Fourier-Transformierten eines Rechteckfensters ergibt, dessen Länge der jeweiligen Signallänge entspricht, um als die Effektivwertfehlerfunktion jeweils den maximalen Fehler für jede Signallänge anzugeben.

6. Verfahren gemäß einem der Ansprüche 1 bis 4, **dadurch gekennzeichnet, dass** sich die Gewichtung aus dem Hauptmaximum der Fourier-Transformierten eines Rechteckfensters, dessen Länge der jeweiligen Signallänge entspricht, bei der Frequenz null bis zur ersten Nullstelle ergibt, um als die Effektivwertfehlerfunktion jeweils den minimalen Fehler für jede Signallänge anzugeben.

7. Verfahren gemäß einem der Ansprüche 1 bis 4, **dadurch gekennzeichnet, dass** sich die Gewichtung als Linearkombination einer den minimalen Fehler für jede Signallänge angebenden Gewichtung und einer den maximalen Fehler für jede Signallänge angebenden Gewichtung ergibt.

8. Verfahren gemäß einem der vorhergehenden Ansprüche, **dadurch gekennzeichnet, dass** die Gewichtung als linearer Filter implementiert ist.

9. Verfahren gemäß einem der Ansprüche 1 bis 5, **dadurch gekennzeichnet, dass** die Effektivwertfehlerfunktion jeweils den maximalen Fehler für jede Signallänge angibt.

10. Verfahren gemäß einem der Ansprüche 1 bis 5, **dadurch gekennzeichnet, dass** die Effektivwertfehlerfunktion jeweils den minimalen Fehler für jede Signallänge angibt.

11. Verfahren gemäß einem der vorhergehenden Ansprüche, **dadurch gekennzeichnet, dass** für jede Messstelle an der Maschine mittels eigener Testmessung eine eigene Effektivwertfehlerfunktion bestimmt wird.

12. System zur Durchführung des Verfahrens gemäß Anspruch 1 zum Bestimmen des Effektivwerts einer an einer Maschine (10) zu messenden Schwingungsgröße, mit
einem Sensor (12) zum Messen der Schwingungsgröße an der Maschine über die Zeit;
einer Auswertungseinrichtung (14), die ausgebildet ist, um
mittels des Sensors die Testmessung auszuführen, um das Testsignal der Schwingungsgröße mit der Testsignallänge zu erhalten, wobei die Testsignallänge mindestens doppelt so lang ist wie die Periodendauer der niedrigsten Schwebefrequenz; und
den Einfluss einer Verkürzung der Signallänge des Testsignals auf den zugehörigen Effektivwert abzuschätzen und daraus die relative Abweichung des sich für eine verkürzte Signallänge ergebende Effektivwerts vom dem sich für die volle Testsignallänge ergebenden Effektivwert als Funktion der Signallänge abzuschätzen, um die Effektivwertfehlerfunktion zu erhalten, wobei
das Testsignal quadriert und in den Frequenzbereich transformiert wird, um Spektralkomponenten des quadrierten Testsignals zu erhalten, wobei der Einfluss einer Verkürzung der Signallänge des Testsignals auf die Spektralkomponenten mittels einer Fensterung des Testsignals abgeschätzt wird, um den Einfluss einer Verkürzung der Signallänge des Testsignals auf den sich ergebenden Effektivwert abzuschätzen, und
der Einfluss einer Verkürzung der Signallänge des Testsignals auf den Effektivwert abgeschätzt wird, indem eine gewichtete Summe von Spektralkomponenten ermittelt wird, wobei die Gewichtung von der Signallänge abhängt; und
einer Ausgabeeinrichtung (24), um entweder

für einen vorgegebenen maximal tolerierbaren Fehler für den Effektivwert anhand der Effektivwertfehlerfunktion eine minimale Messdauer für eine Messung der Schwingungsgröße zur Bestimmung des Effektivwerts auszugeben; oder
einen Qualitätsindikator für den Effektivwert während einer laufenden Messung der Schwingungsgröße zur Bestimmung des Effektivwerts regelmäßig entsprechend der aktuell bereits verstrichenen Messdauer auszugeben, so dass die Messung nach Erreichen eines bestimmten Mindestwerts des Qualitätsindikators beendet werden kann, wobei der Qualitätsindikator entsprechend dem zu der Messdauer gehörigen Effektivwertfehlerwert aus der Effektivwertfehlerfunktion ermittelt wird.

**Claims**

1. Method for determining the root mean square value of a vibration variable that is measured on a machine (10), wherein:

   a test measurement is carried out in order to obtain a test signal of the vibration variable with a test signal length, wherein the test signal length is at least twice as long as the period duration of the lowest beat frequency;
   the influence of the shortening of the signal length of the test signal on the associated root mean square value is estimated and the relative deviation of the root mean square value emerging for a shortened signal length from the root mean square value emerging for the full test signal length is estimated therefrom as a function of the signal length in order to obtain a root mean square value error function, wherein
   the test signal is squared and transformed into the frequency domain in order to obtain spectral components of the squared test signal, wherein the influence of the shortening of the signal length of the test signal on the spectral components by windowing the test signal is estimated in order to estimate the influence of the shortening of the signal length of the test signal on the emerging root mean square value, and
   the influence of the shortening of the signal length of the test signal on the root mean square value is estimated by virtue of ascertaining a weighted sum of spectral components, with the weighting depending on the signal length; and
   a measurement of the vibration variable is carried out for the purposes of determining the root mean square value, wherein the measurement duration of this measurement is selected on the basis of the root mean square value error function.

2. Method according to Claim 1, **characterized in that** a maximum tolerable error for the root mean square value is predetermined and the measurement duration associated with this root mean square value error value according to the root mean square value error function is chosen as the measurement duration.

3. Method according to Claim 1, **characterized in that** a quality indicator corresponding to the root mean square value error value associated with the measurement duration is ascertained for each measurement duration from the root mean square value error function.

4. Method according to Claim 3, **characterized in that**, during the running measurement, the quality indicator is regularly updated and output in accordance with the measurement duration that has already elapsed up until that point such that the measurement can be completed after reaching a certain minimum value of the quality indicator.

5. Method according to any one of the preceding claims, **characterized in that** the weighting emerges as envelope of the Fourier transform of a rectangular window, the length of which corresponds to the respective signal length, in order in each case to specify the maximum error for each signal length as the root mean square value error function.

6. Method according to any one of Claims 1 to 4, **characterized in that** the weighting emerges from the principal maximum of the Fourier transform of a rectangular window, the length of which corresponds to the respective signal length, at the frequency of zero to the first root, in order in each case to specify the minimum error for each signal length as the root mean square value error function.

7. Method according to any one of Claims 1 to 4, **characterized in that** the weighting emerges as a linear combination of a weighting specifying the minimum error for each signal length and a weighting specifying the maximum error for each signal length.

8. Method according to any one of the preceding claims, **characterized in that** the weighting is implemented as a linear filter.

9. Method according to any one of Claims 1 to 5, **characterized in that** the root mean square value error function in each case specifies the maximum error for each signal length.

10. Method according to any one of Claims 1 to 5, **characterized in that** the root mean square value error function in each case specifies the minimum error for each signal length.

**11.** Method according to any one of the preceding claims, **characterized in that** a dedicated root mean square value error function is determined for each measurement point on the machine by means of a dedicated test measurement.

**12.** System for carrying out the method according to Claim 1 for determining the root mean square value of a vibration variable to be measured on a machine (10), having

a sensor (12) for measuring the vibration variable on the machine over time;

an evaluation device (14), embodied

to carry out the test measurement by means of the sensor in order to obtain the test signal of the vibration variable with the test signal length, wherein the test signal length is at least twice as long as the period duration of the lowest beat frequency; and

to estimate the influence of the shortening of the signal length of the test signal on the associated root mean square value and to estimate the relative deviation of the root mean square value emerging for a shortened signal length from the root mean square value emerging for the full test signal length therefrom as a function of the signal length in order to obtain the root mean square value error function, wherein

the test signal is squared and transformed into the frequency domain in order to obtain spectral components of the squared test signal, wherein the influence of the shortening of the signal length of the test signal on the spectral components by windowing the test signal is estimated in order to estimate the influence of the shortening of the signal length of the test signal on the emerging root mean square value, and

the influence of the shortening of the signal length of the test signal on the root mean square value is estimated by virtue of ascertaining a weighted sum of spectral components, with the weighting depending on the signal length; and

an output device (24), either

to output a minimum measurement duration for a measurement of the vibration variable for determining the root mean square value for a predetermined maximum tolerable error for the root mean square value on the basis of the root mean square value error function; or

to output a quality indicator for the root mean square value during a running measurement of the vibration variable for determining the root mean square value at regular intervals according to the measurement duration that has already elapsed up until that point such that the measurement can be completed after reaching a certain minimum value of the quality indicator, wherein the quality indicator is ascertained from the root mean square value error function, in a manner corresponding to the root mean square value error value associated with the measurement duration.

**Revendications**

**1.** Procédé de détermination de la valeur efficace d'une grandeur de vibration mesurée sur une machine (10), dans lequel :

une mesure de test est effectuée pour obtenir un signal de test de la grandeur de vibration avec une longueur de signal de test, dans lequel la longueur de signal de test est au moins deux fois plus longue que la durée de la période de la fréquence de battement la plus basse ;

l'influence d'un raccourcissement de la longueur de signal du signal de test sur la valeur efficace associée est estimée et l'écart relatif de la valeur efficace résultante pour une longueur de signal raccourcie par rapport à la valeur efficace résultante pour la longueur totale du signal de test est estimé en fonction de la longueur de signal afin d'obtenir une fonction d'erreur de la valeur efficace, dans lequel

le signal de test est élevé au carré et transformé dans le domaine fréquentiel afin d'obtenir des composantes spectrales du signal de test élevé au carré, dans lequel l'influence d'un raccourcissement de la longueur de signal du signal de test sur les composantes spectrales est estimée au moyen d'un fenêtrage du signal de test afin d'estimer l'influence d'un raccourcissement de la longueur de signal du signal de test sur la valeur efficace résultante, et

l'influence d'un raccourcissement de la longueur de signal du signal de test sur la valeur efficace est estimée en déterminant une somme pondérée de composantes spectrales, dans lequel la pondération dépend de la longueur de signal ; et

une mesure de la grandeur de vibration est effectuée afin de déterminer la valeur efficace, dans lequel la durée de mesure de ladite mesure est sélectionnée sur la base de la fonction d'erreur de la valeur efficace.

**2.** Procédé selon la revendication 1, **caractérisé en ce qu'**une erreur maximale tolérable est prédéfinie pour la valeur efficace et la durée de mesure associée à ladite valeur d'erreur de la valeur efficace conformément à la fonction d'erreur de la valeur efficace est sélectionnée en tant que durée de mesure.

**3.** Procédé selon la revendication 1, **caractérisé en ce qu'**un indicateur de qualité correspondant à la valeur d'erreur de la valeur efficace associée à la durée de mesure est déterminé à partir de la fonction d'erreur de valeur efficace pour chaque durée de mesure.

**4.** Procédé selon la revendication 3, **caractérisée en ce que** l'indicateur de qualité est régulièrement mis à jour et délivré en sortie pendant la mesure en cours d'une manière qui correspond à la durée de mesure actuelle déjà écoulée, de sorte que la mesure peut être arrêtée après qu'une valeur minimale déterminée de l'indicateur de qualité a été atteinte.

**5.** Procédé selon l'une des revendications précédentes, **caractérisé en ce que** la pondération se présente sous la forme d'une enveloppe de la transformée de Fourier d'une fenêtre rectangulaire dont la longueur correspond à la longueur de signal respective, afin de délivrer en sortie l'erreur maximale pour chaque longueur de signal en tant que fonction d'erreur de la valeur efficace.

**6.** Procédé selon l'une des revendications 1 à 4, **caractérisé en ce que** la pondération se présente sous la forme du maximum principal de la transformée de Fourier d'une fenêtre rectangulaire dont la longueur correspond à la longueur de signal respective, à une fréquence nulle jusqu'au premier point à zéro, afin de délivrer en sortie l'erreur minimale respective pour chaque longueur de signal en tant que fonction d'erreur de la valeur efficace.

**7.** Procédé selon l'une des revendications 1 à 4, **caractérisé en ce que** la pondération se présente sous la forme d'une combinaison linéaire d'une pondération représentant l'erreur minimale pour chaque longueur de signal et d'une pondération représentant l'erreur maximale pour chaque longueur de signal.

**8.** Procédé selon l'une des revendications précédentes, **caractérisé en ce que** la pondération est mise en oeuvre sous la forme d'un filtre linéaire.

**9.** Procédé selon l'une des revendications 1 à 5, **caractérisé en ce que** la fonction d'erreur de la valeur efficace représente respectivement l'erreur maximale pour chaque longueur de signal.

**10.** Procédé selon l'une des revendications 1 à 5, **caractérisé en ce que** la fonction d'erreur de la valeur efficace représente respectivement l'erreur minimale pour chaque longueur de signal.

**11.** Procédé selon l'une des revendications précédentes, **caractérisé en ce que**, pour chaque point de mesure sur la machine, une fonction d'erreur de la valeur efficace propre est déterminée au moyen d'une mesure de test propre.

**12.** Système destiné à la mise en oeuvre du procédé selon la revendication 1 pour déterminer la valeur efficace d'une grandeur de vibration à mesurer sur une machine (10), comprenant
un capteur (12) pour mesurer la grandeur de vibration sur la machine au cours du temps ;
un dispositif d'évaluation (14) conçu
pour effectuer la mesure de test au moyen du capteur afin d'obtenir le signal de test de la grandeur de vibration avec la longueur de signal de test, dans lequel la longueur de signal de test est au moins deux fois plus longue que la durée de la période de la fréquence de battement la plus basse ; et
pour estimer l'influence d'un raccourcissement de la longueur de signal du signal de test sur la valeur efficace associée et pour estimer l'écart relatif de la valeur efficace résultante pour une longueur de signal raccourcie par rapport à la valeur efficace résultante pour la longueur totale du signal de test en fonction de la longueur de signal afin d'obtenir la fonction d'erreur de la valeur efficace, dans lequel
le signal de test est élevé au carré et transformé dans le domaine fréquentiel afin d'obtenir des composantes spectrales du signal de test élevé au carré, dans lequel l'influence d'un raccourcissement de la longueur de signal du signal de test sur les composantes spectrales est estimée au moyen d'un fenêtrage du signal de test afin d'estimer l'influence d'un raccourcissement de la longueur de signal du signal de test sur la valeur efficace résultante, et l'influence d'un raccourcissement de la longueur de signal du signal de test sur la valeur efficace est estimée en déterminant une somme pondérée des composantes spectrales, dans lequel la pondération dépend de la longueur de signal ; et
un dispositif de sortie (24) conçu soit
pour délivrer en sortie, pour une erreur maximale tolérable prédéterminée de la valeur efficace, sur la base de la fonction d'erreur de la valeur efficace, une durée de mesure minimale pour une mesure de la grandeur de vibration afin de déterminer la valeur efficace ; soit pour délivrer en sortie régulièrement un indicateur de qualité de la valeur efficace pendant une mesure continue de la grandeur de vibration afin de déterminer la valeur efficace d'une manière qui correspond à la durée de mesure actuelle déjà écoulée, de sorte que la mesure peut être arrêtée après qu'une valeur minimale déterminée de l'indicateur de qualité a été atteinte, dans lequel l'indicateur de qualité est déterminé à partir de la fonction d'erreur de la valeur efficace d'une manière qui correspond à la valeur d'erreur de la valeur efficace associée à la durée de mesure.

# Fig. 1

Relativer Fehler von $\bar{x}_{\mathrm{eff}}$

# Fig. 2

Fig. 3

Fig. 4

Einfluss der Fensterlänge τ und Verschiebung $t_0$ auf $P_x$

Fig. 5

Einfluss der Fensterlänge τ auf ΔRMS

Fig. 6

$$\boxed{\begin{array}{c}\text{Testmessung der Länge } \tau_0 \\ y(t)\end{array}}$$

$$\downarrow$$

$$\boxed{\begin{array}{c}\text{Quadrierer} \\ y(t) \;\mapsto\; y^2(t)\end{array}}$$

$$\downarrow$$

$$\boxed{\begin{array}{c}\text{Fourier Koeffizienten} \\ Y_k^{(2)}\end{array}}$$

$$\downarrow$$

$$\boxed{\begin{array}{c}\text{Bestimme } M \text{ Messzeiten } \tau_m = \\ N_m \cdot T \;<\; \tau_0 \text{ für } m = 1,\ldots,M\end{array}}$$

$$\downarrow$$

$$\boxed{m \;=\; 1}$$

$$\downarrow$$

$$\boxed{\text{Bestimme } W_a \text{ für gegebenes } N_m}$$

$$\downarrow$$

$$\boxed{\text{Bestimme zugehöriges } Y_a^{(2)}}$$

$$\downarrow$$

$$\boxed{\text{Bestimme } \Delta y_{\text{eff}} \text{ für gegebenes } \tau_m}$$

$$\downarrow$$

$$\left\langle \; m \mathrel{+}= 1 \; \right\rangle$$

$$m \leq M$$

$$m \leq M$$

$$\boxed{\begin{array}{c}\text{Bestimme minimale Messdauer} \\ \tau_{\min} = \min\{\tau_m \;:\; \Delta y_{\text{eff}}(\tau_m) \leq \Delta y_{\text{eff,max}}\}\end{array}}$$

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10134013 A1
- WO 2011087440 A1
- US 6308139 B1
- DE 9400950 U1
- KR 20160109159 A